# EUROPÄISCHE PATENTANMELDUNG

(11) **EP 1 481 789 A2**
(43) Veröffentlichungstag der Anmeldung: **01.12.2004**
(21) Anmeldenummer: 04012778.9
(22) Anmeldetag: 19.02.1998
(51) Int. Cl.: B29C 51/04, B29C 51/34, B29C 51/42, B65B 9/04, B65D 51/20

(54) **Verfahren und Vorrichtung zur Herstellung von Verpackungsbehältern aus Kunststoff, Verpackungsmaschine und Verpackungsbehälter**

(30) Priorität: 20.02.1997 DE 19706797
(62) Teilanmeldung aus: 98910706.5
(71) Anmelder: Kourtoglou S.A. Food Packaging Machinery, 21053 Nea Kios- Argos (GR)
(72) Erfinder: Kourtoglou, Dimitrios, 17124 Nea Smirni-Athen (GR); Kourtoglou, Ionnis, 17124 Nea Smirni-Athen (GR)
(74) Vertreter: Grünecker, Kinkeldey, Stockmair & Schwanhäusser Anwaltssozietät

(57) **Zusammenfassung**

Die Erfindung betrifft ein Verfahren zur Herstellung von Verpackungsbehältern (3) aus Kunststoff, einen Verpackungsbehälter (3), insbesondere hergestellt nach diesem Verfahren, ein Verfahren zur Herstellung befüllter und verschlossener Verpackungsbehälter (3), eine Formstation (II) für einen Kunststoff-Verpackungsbehälter (3) sowie eine Verpackungsmaschine mit einer solchen Formstation (II) Erfindungsgemäß wird in einem kontinuierlichen Verfahren und einer zugehörigen Verpackungsmaschine ein Verpackungsbehälter (3) in einem kombinierten Tiefzieh-Blasform-Vorgang mit Hinterschneidungen hergestellt und anschließend in einem kontinuierlichen Prozeß mit einem Verpackungsgut befüllt und versiegelt, wobei anschließend die geschlossenen Verpackungsbehälter (3) voneinander abgetrennt und, gegebenenfalls mit einem Wiederverschlussdeckel (35) versehen, abgeführt werden.

## Beschreibung

Die Erfindung betrifft ein Verfahren zur Herstellung von befüllten und verschlossenen Verpackungsbehältern aus Kunststoff, einen Verpackungsbehälter, insbesondere hergestellt nach diesem Verfahren, eine Formstation für einen Kunststoff-Verpackungsbehalter sowie eine Verpackungsmaschine mit einer solchen Formstation.

Die Herstellung von Verpackungsbehältern aus Kunststoff, insbesondere zur Verpackung von Lebensmitteln, weist bisher verschiedene Nachteile auf, die dazu geführt haben, dass rationell hergestellte Kunststoff-Verpackungsbehälter nur in sehr eingeschränkter Formgebung und im allgemeinen ohne Wiederverschlussmöglichkeiten vorhanden sind. Insbesondere ist es bisher nur möglich gewesen, durch Tiefziehen, Blasformen oder dergleichen, geradwandige, zylindrische oder konische Becher bzw. Behälter herzustellen, die keine Hinterschneidungen aufweisen.

Derartige Behälter erweisen sich hinsichtlich ihrer Stabilität und Standfestigkeit jedoch als schwierig. Außerdem können flüssige Stoffe, wie z.B. pastöse Lebensmittel, in solche Behälter nicht so schnell abgefüllt werden, da die Reaktionskräfte stets dazu neigen, das Verpackungsgut während des Befüllvorganges wieder herauszuspritzen. In geradwandige oder konische Behälter können daher flüssige Stoffe nicht so schnell abgefüllt werden, wie dies wünschenswert und insbesondere auch bei Behältern möglich ist, die hinterschnitten sind und bei denen die Einfüllöffnung im Querschnitt kleiner ist als der übrige Behälterquerschnitt, so dass ein Zurückspritzen oder Herausschleudern vermieden wird

Verpackungsbehälter, die aus Kunststofffolie hergestellt worden sind, konnten aus herstellungstechnischen Gründen daher nicht Formgebungen übernehmen, wie sie sich als vorteilhaft im Glas- oder Keramikbereich oder bei spritzgegossenen Behältern herausgestellt haben. Überdies ist es bei Verpackungsbehältern, die aus Kunststoffmaterial-Folie hergestellt sind, vielfach nicht möglich, die entsprechenden Einfüllöffnungen wieder dauerhaft zu verschließen, da sie vielfach nur durch eine Einmalgebrauchs-Siegelfolie verschlossen sind, die nach dem Aufreißen nicht wieder dauerhaft verschlossen werden kann.

Der Erfindung liegt daher die Aufgabe zugrunde, ein Verfahren zur Herstellung von befüllten und verschlossenen Verpackungsbehältern aus Kunststoff, eine Formstation für einen solchen Kunststoff-Verpackungsbehälter, eine Verpackungsmaschine und einen Kunststoff-Verpackungsbehälter, insbesondere hergestellt nach vorgenannten Verfahren, zu schaffen, die eine wesentlich größere Variabilität hinsichtlich der Herstellbarkeit von Verpackungsbehältern, insbesondere für Lebensmittelverpackungen, gestatten und es ermöglichen, die Vorteile herkömmlicher, nicht auf der Basis von Kunststoff-Folie hergestellter Verpackungsbehälter, wie Wiederverschließbarkeit, gute Stand- und Formfestigkeit bei hoher Effizienz in der Herstellung zu vereinen.

Diese Aufgabe wird bei einem Verfahren der eingangs genannten Art erfindungsgemäß gelöst durch die Merkmale des Anspruches 1, wobei zunächst die Folie durch zumindest einen Stempel des Oberwerkzeuges in einem Tiefziehvorgang in einen Formhohlraum des Unterwerkzeuges verlagert wird und anschließend durch einen Blasformvorgang unter Eintragen eines gasförmigen Mediums in die Form einer Endformgebung unter Anlegen der Folie an eine Wandung des in dem Unterwerkzeug ausgebildeten Formhohlraumes erfolgt Auf diese Weise können Verpackungsbehälter mit praktisch beliebigem Querschnitt großer Standfestigkeit hergestellt werden, die auch bei reduzierter Wanddicke hervorragende Verpackungseigenschaften aufweisen und z.B. mit Schraubverschlüssen versehen werden können.

Vorzugsweise wird die Folie vor dem Angriff des Stempels des Oberwerkzeuges vorgewärmt und erfolgt das Tiefziehen mit variabler Geschwindigkeit des Stempels über den Stempelweg.

In Abhängigkeit von einer vorgegebenen Stempelposition, insbesondere nahe dem Abschluss oder nach Abschluss des Tiefziehvorganges (maximaler Stempelweg des Stempels des Oberwerkzeuges) wird der Blasformvorgang eingeleitet, indem in den Ringraum zwischen Stempel und in den Formhohlraum es Unterwerkzeuges vorgeformtem Folienmaterial-Formling Druckluft eingeblasen wird, die dazu führt, dass sich die Folie vollständig und auch in einem vorzugsweise oberen Hinterschneidungsbereich vollständig an den Formhohlraum im Unterwerkzeug anlegt.

Weitere, bevorzugte Ausgestaltungen des Erfindungsgegenstandes sind in den übrigen Unteransprüchen dargelegt

Hinsichtlich der Formstation für einen Kunststoff-Verpackungsbehälter wird die vorgenannte Aufgabe erfindungsgemäß durch die Merkmale des Anspruches 22 gelöst.

Vorzugsweise sind die den Formhohlraum bildenden Formteile des Unterwerkzeuges zumindest teilweise einer lokalen Temperaturführung durch zumindest partielle Kühlung oder Erwärmung unterworfen.

Weitere, bevorzugte Ausgestaltungen der erfindungsgemäßen Formstation sind in den übrigen Unteransprüchen dargelegt

Die Lösung der vorgenannten Aufgabe erfolgt hinsichtlich der Verpackungsmaschine erfindungsgemäß dadurch, dass diese aufweist, eine Kunststoff-Verpackungsbehälter-Formstation, in der aus einer Kunststofffolie in einem kombinierten Tiefzieh-Blasformvorgang ein zumindest eine Hinterschneidung aufweisender Verpackungsbehälter herstellbar ist, eine Füllstation zum Befüllen des Verpackungsbehälters mit einem Verpackungsgut, einer Siegelstation zum versiegeln einer Einfüllöffnung des Verpac??kungsbehalters, einer Trennstation zum Individualisieren der Verpackungsbehälter und einer Abgabestation für die befüllten und versiegelten Verpackungsbehälter.

Durch die erfindungsgemaße Lösung ist es in vorteilhafter Weise möglich, in einer kompakten Verpackungsmaschineneinheit z.B. verpackte Lebensmittel herzustellen, wobei eingangsseitig kontinuierlich die Kunststofffolie als Halbzeug zur Ausbildung des Verpackungsbehälters in der Formstation zugeführt wird, während abgabeseitig das individuell in die einzelnen Verpackungsbehälter verpackte Verpackungsgut die Verpackungsmaschine verlässt.

Bevorzugte Ausgestaltungen des Erfindungsgegenstandes sind auch hinsichtlich der Verpackungsmaschine in den übrigen Unteransprüchen dargelegt.

Hinsichtlich des Kunststoff-Verpackungsbehälters selbst wird die vorgenannte Aufgabe erfindungsgemäß dadurch gelöst, dass der Verpackungsbehälter, hergestellt aus einer Kunststofffolie, zumindest eine Hinterschneidung aufweist und mit einer, mit einer Öffnungsvorrichtung versehenen Siegelfolie verschließbar und/oder mit Verschlussmitteln zum Halten eines Deckels versehen ist.

Vorzugsweise weist der Verpackungsbehälter einen radial vorspringenden Umfangsrandabschnitt zur Halterung eines zugehörigen Deckels aus Kunststofffolie auf.

Zum dauerhaften Wiederverschließen des einmal geöffneten Verpackungsbehälters ist es vorteilhaft, dass dieser als Verschlussmittel ein Schraubgewinde in einem Hals- oder Bodenbereich des Verpackungsbehälters aufweist, mit dem ein insbesondere ebenfalls aus Kunststoffmaterial bestehender Deckel verschraubbar ist

Bevorzugte Ausgestaltungen sind in den übrigen Unteransprüchen dargelegt.

Die Erfindung wird nachstehend anhand von Ausführungsbeispielen und zugehörigen Zeichnungen näher erläutert. In diesen zeigen:
- Fig. 1: eine schematische Prinzipskizze der Arbeitsweise und der Anordnung der Stationen einer Verpackungsmaschine nach einem Ausführungsbeispiel der Erfindung,
- Fig. 2a bis 2e: schematische Querschnittsdarstellungen der Arbeitsweise von Ober- und Unterwerkzeug in einer Formstation einer Verpackungsmaschine zur Herstellung eines Verpackungsbehälters,
- Fig. 3: eine perspektivische Schrägansicht eines Unterwerkzeuges der Formstation nach einem ersten Ausfuhrungsbeispiel,
- Fig. 4a bis 4c: eine Vorderansicht, eine Draufsicht und eine Seitenansicht des Unterwerkzeuges nach Fig. 3,
- Fig. 5: eine perspektivische Schragansicht eines Unterwerkzeugs, das in einem Säulenführungsgestell der Formstation aufgenommen ist, nach einem weiteren Ausführungsbeispiel,
- Fig. 6: eine Vorderansicht nach Fig. 5,
- Fig. 7: eine Draufsicht nach Fig. 6,
- Fig 8a: eine Teildarstellung nach Fig. 7 mit Angabe eines Schnittverlaufes, wobei das Unterwerkzeug in geschlossenem Zustand dargestellt ist,
- Fig. 8b: eine Schnittdarstellung nach Fig. 8a,
- Fig. 9: eine vergrößerte Darstellung der Einzelheit A nach Fig. 8,
- Fig. 10: eine Teil-Darstellung ähnlich derjenigen in Fig. 8 mit Angabe eines Schnittverlaufes, wobei das Unterwerkzeug sich jedoch in geöffnetem Zustand befindet,
- Fig. 11: eine Schnittdarstellung gemaß Fig. 10,
- Fig. 12: eine vergrößerte Darstellung der Einzelheit B in Fig. 11,
- Fig. 13: eine Teildarstellung ähnlich derjenigen in den Fig 8 und 10 für das Unterwerkzeug in geöffnetem Zustand mit verändertem Schnittverlauf,
- Fig. 14: eine Schnittdarstellung nach Fig. 13,

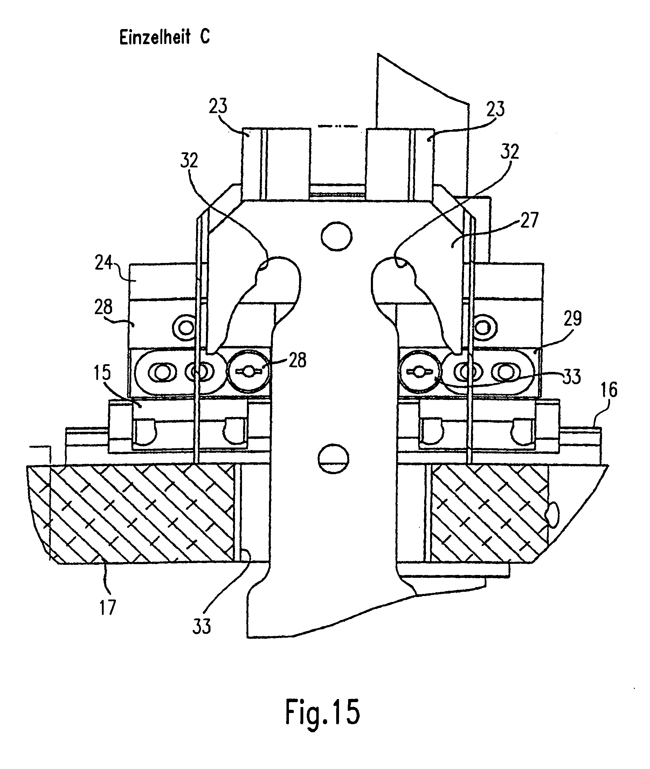

- Fig. 15: eine vergrößerte Darstellung der Einzelheit betreffend die Steuerschablone für die Öffnungs- und Schließbewegung des Unterwerkzeuges nach Fig. 14, und
- Fig. 16a bis 16c: Ausführungsbeispiele von Verpackungsbehaltern.

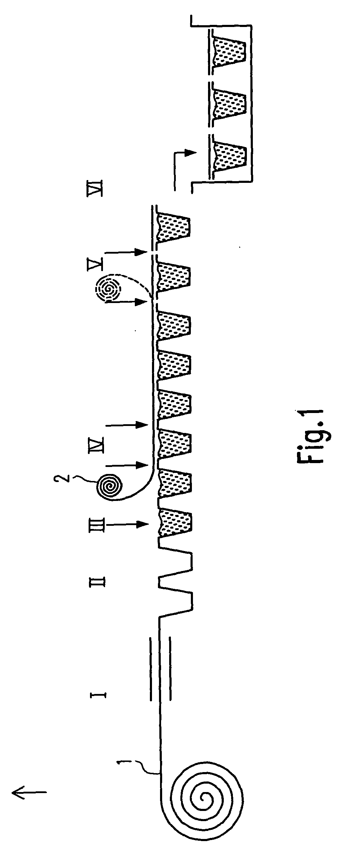

Fig 1 verdeutlicht eine Prinzipskizze des Arbeitsverfahrens der Verpackungsmaschine, die im Anschluß an eine Folien-Formwarmstation I integral eine Formstation II zum Ausformen der Verpackungsbehalter, anschließend eine Füllstation III, gefolgt von einer Heißsiegelstation IV, einer Schneidstation V, in der die befüllten und gesiegelten Verpackungsbehälter individualisiert werden, sowie einer Abgabe- und Verpackungsstation VI, aufweist.

Von der Aufgabeseite der Verpackungsmaschine her wird eine hinreichend formstabile und tiefziehbare Verpackungsfolie, vorzugsweise aus thermoplastischem Kunststoff, zugeführt und in der Vorwärmstation I z.B. durch Infrarotstrahlung erhitzt. Anschließend erfolgt in der Formstation II das Ausbilden des Verpackungsbehälters durch eine kombinierte Tiefzieh-Blasform-Formgebung, wie anhand der nachfolgend noch genauer beschnebenen werkzeugtechnischen Konfiguration der Formstation erläutert wird.

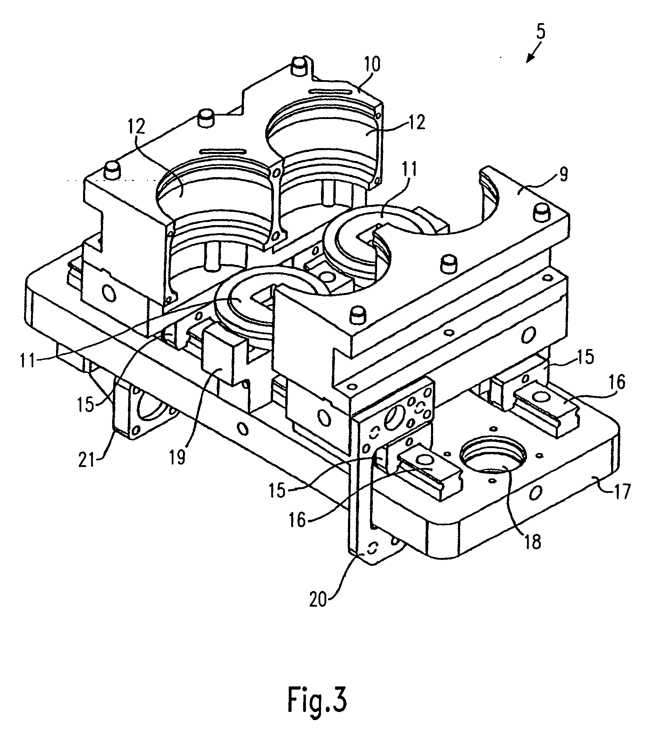

Die so als Vertiefungen in der kontinuierlichen Verpackungsfolie ausgebildeten Halbzeug-Verpackungsbehälter können aufgrund ihres fortbestehenden Materialzusammenhanges leicht durch die Verpackungsmaschine weitertransportiert werden und gelangen in die Füllstation, wo die Verpackungsbehälter mit einem Verpackungsgut beliebiger Art, vorzugsweise von Lebensmitteln, befüllt werden. Nur der Einfachheit der Darstellung halber sind die Vorratsbehälter 3 in Fig. 1 schematisch als einfache konische Körper ohne Hinterschneidungen dargestellt. Tatsächlich entsprechen die Formen Behältern wie z.B. in Fig. 3e gezeigt.

Anschließend werden die befüllten Verpackungsbehälter unter Wahrung ihres Materialzusammenhanges weitertransportiert zu einer Heißsiegelstation, wobei ein Verschließen der gefüllten Verpackungsbehälter durch Aufbringen einer Heißsiegelfolie 2 (z.B. einer Aluminium-Kunststoff-Verbundfolie) erfolgt.

Wie schematisch in Fig. 1 dargestellt ist, erfolgt vorzugsweise die Zuführung von oben von einem Vorratswickel her in Verbindung mit einem hier nicht näher dargestellten Heißsiegelstempel

Anschließend erfolgt in der Schneidstation das Ausstanzen der Deckelform aus der Heißsiegelfolie unter gleichzeitigem Durchtrennen des Materialzusammenhanges zwischen benachbarten Verpackungsbehaltern, so dass sowohl die Heißsiegelfolie 2 als auch die Verpackungsfolie 1 durchtrennt werden.

Die befullten und verschlossenen Verpackungsbehälter werden anschließend zur Abgabestation und Verpackung zu Paletten oder in Behälter abgeführt.

Gegebenenfalls kann auch ein weiterer Deckel, z.B. ein Schraubdeckel, auf den versiegelten und befüllten Verpackungsbehälter aufgesetzt werden.

Wesentlich für die besondere Variabilität und Konfiguration der Verpackungsbehälter ist die Ausbildung der Formstation II, die nachfolgend in ihrem werkzeugtechnischen Aufbau genauer erläutert wird.

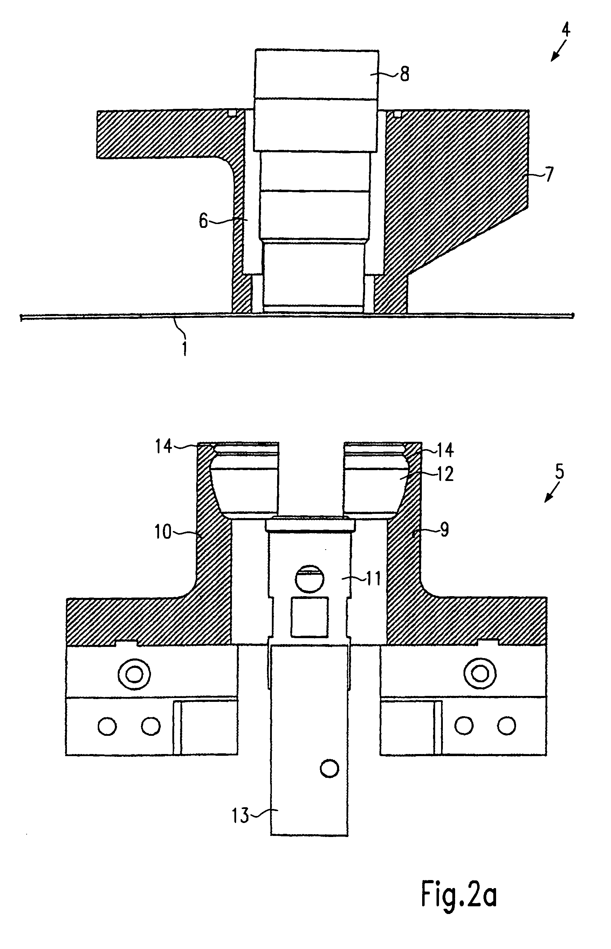

Fig. 2a zeigt in schematischer Darstellung auch für die Erlauterung des Verfahrens zur Herstellung eines Verpackungsbehälters 3 in vertikaler schematischer Schnittdarstellung ein Oberwerkzeug 4 und ein Unterwerkzeug 5, die wesentlicher Bestandteil der Formstation II zur Ausbildung des Verpackungsbehälters 3 durch einen kombinierten Tiefzieh-Blasformvorgang der Verpackungsfolie 1 bilden In einer zugleich als Druckluftraum 6 dienenden Ausnehmung eines Aufnahmekörpers 7 des Oberwerkzeuges 4 ist vertikal beweglich ein vorzugsweise gestufter Stempel geführt, derart, dass der Druckluftraum 6 als Ringraum zwischen dem Stempel 8 und dem Aufnahmekörper zur Verfügung steht. Der Aufnahmekörper 7 ist stationär angeordnet, die durch die Formstation II kontinuierlich geführte Verpackungsfolie ist mit 1 bezeichnet.

Obwohl dies hier nicht im einzelnen dargestellt ist, wird die Verpackungsfolie 1, insbesondere thermoplastische Kunststofffolie, die auch mehrlagig ausgeführt sein kann und die beflammt, beschriftet, dekoriert, perforiert (und zwar jeweils in einer oder mehreren Schichten) ausgeführt sein kann und entsprechenden Vorbehandlungen zur Produktkennzeichnung unterzogen werden kann, in der Vorwärmstation I erhitzt, ehe sie in die Formstation II eingeführt wird.

Hierfür sind Infrarotverfahren ebenso vorteilhaft anwendbar wie induktives oder Erhitzen der Verpackungsfolie 1 durch einen erwärmten Gasstrom. Die Vorerwärmung der Verpackungsfolie 1 soll im allgemeinen möglichst homogen erfolgen.

Lediglich für bestimmte, spezielle Verpackungsbehältergeometrien (einfache Formen) kann es auch vorteilhaft sein, ein ausgeprägtes örtliches Wärmeprofil für die Erwärmung bestimmter Bereiche der Verpackungsfolie 1 vorzusehen und eine örtlich variable Erhitzung zu gestatten.

Hierzu werden Steuerungseinrichtungen für das gesamte, in der Vorwärmstation I befindliche Erhitzungswerkzeug oder einer Erhitzungsplatte für spezielle Formen bzw. zur Erhöhung der Fertigungsgeschwindigkeit eingesetzt. Über die Zuordnung entsprechender Sensoren ist es auch möglich, partielle Bereiche und Einzelflächen der Verpackungsfolie hinsichtlich ihrer Vorerwärmung speziell zu steuern.

Für schwierige Herstellungsaufgaben kann auch eine Kombination von Erhitzung und Kühlung der Verpackungsfolie 1 für eine örtlich variable Temperaturführung der Verpackungsfolie 1 sinnvoll sein. Wird eine mehrschichtige Verpackungsfolie verwendet, kann auch eine getrennte bzw. unterschiedliche Erwärmung von oben und unten, insbesondere z.B. durch Infrarotstrahlung, erfolgen.

Das Unterwerkzeug 5, das in Fig. 2a in geöffnetem Zustand dargestellt ist (wie auch das Gesamtwerkzeug, bestehend aus Ober- und Unterwerkzeug 4, 5 in geöffnetem Zustand dargestellt ist), weist zwei lateral bewegbare Unterwerkzeug-Formhälften 9, 10 sowie einen Gegenstempel 11 auf, der bodenseitig einen im übrigen durch die beiden Unterwerkzeug-Formhälften 9, 10 begrenzten, vorzugsweise rotationssymmetrischen Formhohlraum 12 begrenzt. Der Gegenstempel 11 ist seinerseits über einen Lagerkörper 13 abgestützt und kann auch vertikal beweglich sein. Der Formhohlraum 12 weist im vorliegenden Ausfuhrungsbeispiel Hinterschneidungen 14 auf, so dass es die spezielle Gestaltung des Unterwerkzeuges 5 ermöglicht, wesentlich formvariablere und standsicherere Verpackungsbehälter 3 herzustellen.

Obwohl dies hier nicht im einzelnen dargestellt ist, werden vorzugsweise die Unterwerkzeug-Formhälften 9, 10 wie auch der Gegenstempel 11 individuell beheizt und/oder gekuhlt Dies gilt auch für den Stempel 8 bzw. den Aufnahmekörper 7 des Oberwerkzeuges. Das Gesamtwerkzeug besteht daher vorzugsweise aus gut wärmeleitfähigem Material, vorzugsweise aus einer Aluminiumlegierung.

In Abhängigkeit von der Geometrie des Formhohlraumes 12 können auch andere Werkstoffe für das Ober- und Unterwerkzeug und eine spezielle örtlich gesteuerte, gezielte Temperaturführung im Werkzeug ausgeführt werden, insbesondere unter Verwendung von Lokal-Sensoren, deren Signale in einer elektronischen Steuereinrichtung verarbeitet werden.

Obwohl dies hier nicht dargestellt ist, kann innerhalb der Formstation auch ein sofortiges Etikettieren durch zusätzliche Zuführung eines Etikettenbandes zu dem Formhohlraum oder durch Einlegen von Einzeletiketten in den Formhohlraum 12 (vorzugsweise mit Zuführaggregat oder einem Industrieroboter) erfolgen.

Um eine hohe Anpassbarkeit an unterschiedliche Verpackungsfolien 1 zu gewährleisten, sind alle Elemente der Formstation, d.h. alle Teile des Ober- und Unterwerkzeuges 4, 5, insbesondere der Oberstempel 8 bzw. die formgebenden Elemente des Unterwerkzeuges 5 leicht und rasch auswechselbar.

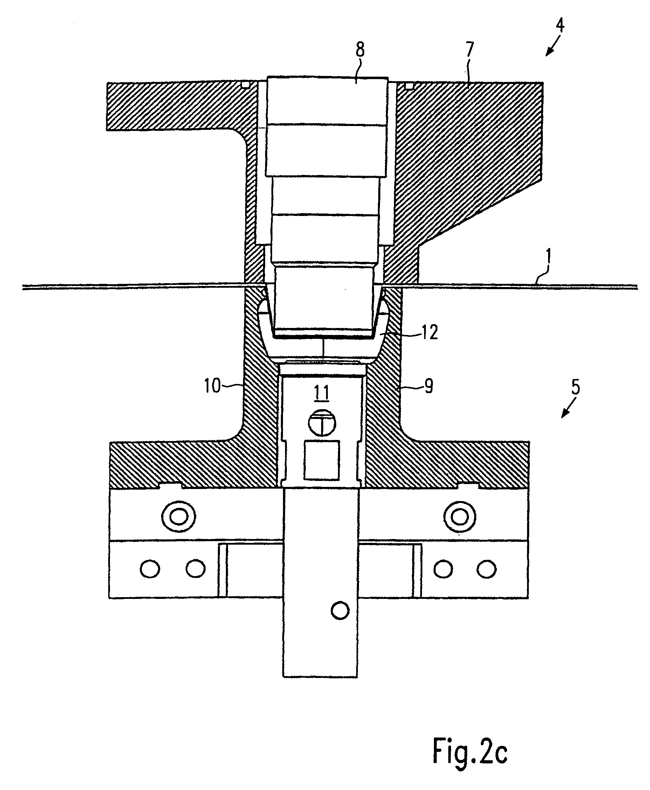

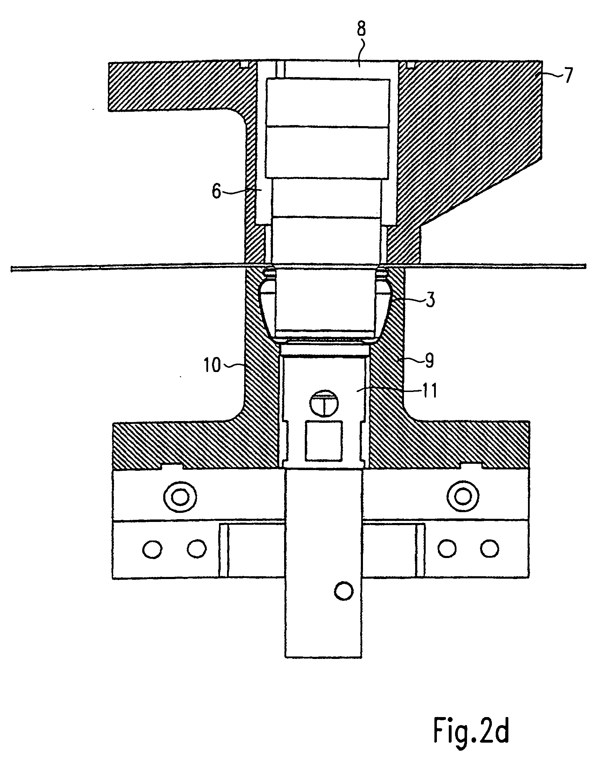

Das Stempelmaterial des Stempels 8 bzw. des Gegenstempels 11 ist für den Ablauf des Verpackungsfolien-Formvorganges und für die Materialwanderung innerhalb des Formhohlraumes besonders wichtig, außerdem ist die Stempelgeometrie auf die Geometrie des Formhohlraumes abgestimmt und wird ein Geschwindigkeitsprofil für das durch den Oberstempel 8 erfolgende Tiefziehen der Verpackungsfolie 1 in den Formhohlraum 12 gewählt. Vorzugsweise wird der Stempel 8 (Tiefziehkolben) pneumatisch gesteuert. Die Steuerung der Stempelgeschwindigkeit erfolgt exakt in Abhängigkeit von der Geometrie des herzustellenden Verpackungsformkorpers. In Abhängigkeit von der erforderlichen Präzision der Geschwindigkeitssteuerung der Stempelbewegung kann der Stempel 8 (Tiefziehkolben) anstelle einer pneumatischen Steuerung auch Servomotoren gesteuert werden. Die Stempelgeschwindigkeit ist somit in starkem Maße vom Stempelweg, d.h. von der jeweiligen Eintauchtiefe des Stempels in den Formhohlraum unter gleichzeitigem Tiefziehen der Verpackungsfolie 1 abhängig (s. auch Fig. 2c, 2d).

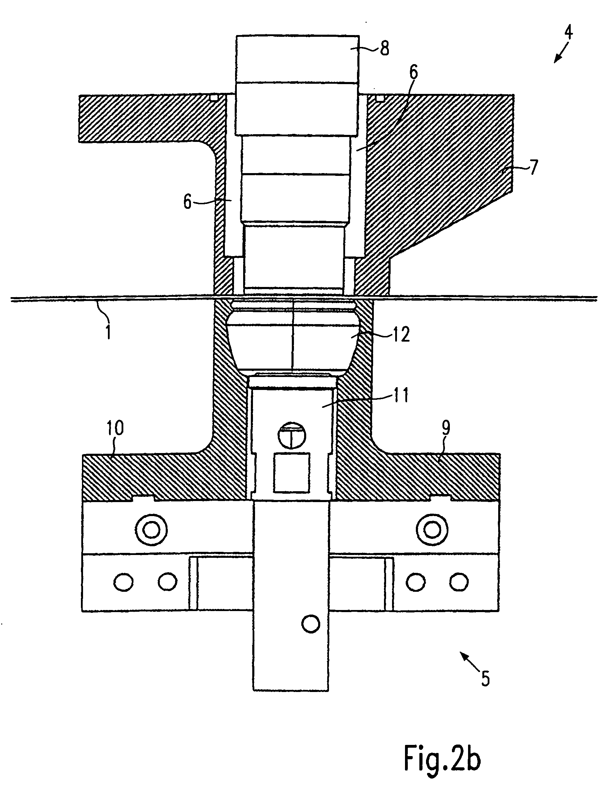

Fig. 2b zeigt das geschlossene, aus Ober- und Unterwerkzeug 4, 5 bestehende Gesamtwerkzeug, wobei die Unterwerkzeug-Formhälfte 9, 10 in Verbindung mit dem bodenseitigen Gegenstempel 11 den Formhohlraum 12 begrenzen und der Aufnahmekörper 7 als Niederhalter für die erhitzte Verpackungsfolie 1 wirksam ist. Der Stempel 8 ist in Fig. 2b am Beginn des Tiefziehvorganges (aufsitzend auf der Verpackungsfolie 1) gezeigt.

Fig. 2c verdeutlicht einen ersten Abschnitt des Tiefziehvorganges der Verpackungsfolie 1 hinein in den Formhohlraum 12.

In Fig. 2d ist der Stempel 8 ist seiner unteren Endlage gezeigt, und der Verpackungsbehälter 3 ist durch Überlagerung der Endphase des Tiefziehvorgangs mit einem Blasformvorgang durch Einblasen von Druckluft aus dem Druckluftraum 6 entlang des Stempels 8 in den vorgeformten Verpackungsbehälter-Rohling, insbesondere die Seitenausformung des Verpackungsbehälters 3, weitergeführt und der Verpackungsbehälter 3 endgültig ausgebildet, indem durch die eingeblasene Druckluft die Verpackungsfolie sich in radialer Richtung von dem Stempel 8 entfernt und an die Innenwandung des Formhohlraumes 12 komplett anlegt.

Gegebenenfalls kann in Abhängigkeit von der Form der Stempel 8 auch mit radial und/oder axial verstellbaren Elementen fur eine Aufweitfunktion bzw. Spreizfunktion vorgesehen sein, um bereits die endgültige Form des Verpackungsbehälters 3 während des Tiefziehvorganges weitestmöglich anzunähem und den Formänderungsanteil, der durch den anschließenden oder während der Endphase des Tiefziehvorganges gleichzeitig mit diesem durchgeführten Blasformvorgang erhalten wird, verhältnismäßig gering zu halten. Durch das Anlegen der erhitzten Verpackungsfolie 1 an die Wandung des Formhohlraumes 12 des Unterwerkzeuges 5 infolge des Luftdruckes (Blasform) kühlt sich die Folie dort ab.

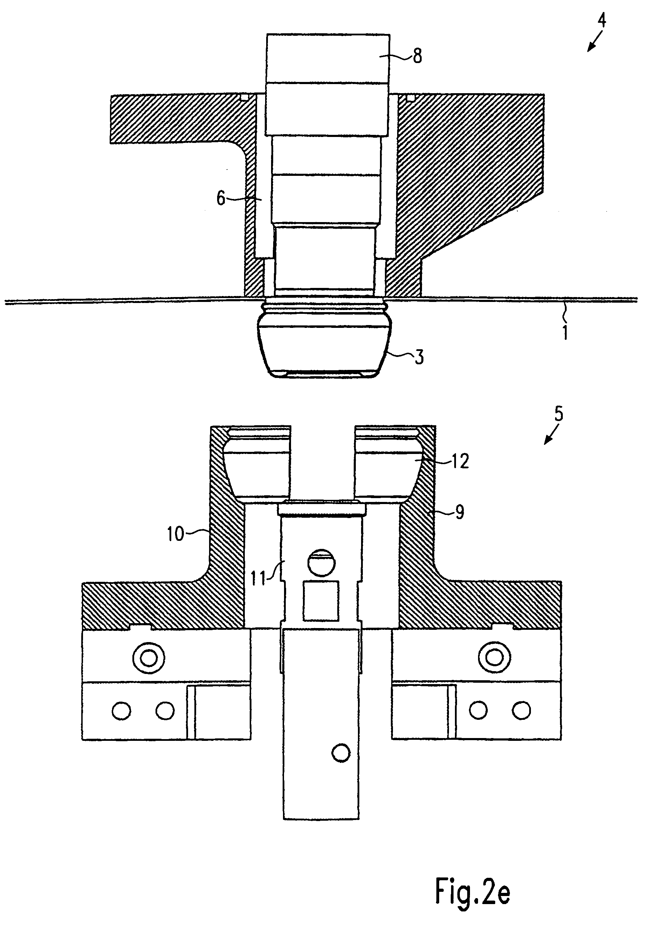

Nach endgültiger Ausformung des Verpackungsbehalters 3 im Unterwerkzeug 5 wird der Oberstempel 8 wieder zurückgezogen und das Unterwerkzeug 5 geöffnet, wie dies in Fig. 2e dargestellt ist.

Zugleich wird das Unterwerkzeug nach unten zurückgeführt, so dass der hergestellte Verpackungsformkörper 3 in integralem Materialverbund mit der übrigen Verpackungsfolie 1 an dieser fest hängt und auch mit dieser aus der Formstation II in eine anschließende Füllstation transportiert werden kann.

Der Verpackungsbehälter 3 kann aufgrund der speziellen Werkzeuggestaltung des Unterwerkzeuges und der lateralen Beweglichkeit der beiden Unterwerkzeug-Formhälften 9 und 10 auch Hinterschneidungen 14 aufweisen, ohne dass das Endformen irgendwelche Schwierigkeiten bereitet.

Obwohl dies in den Figuren nicht dargestellt ist, kann der Verpackungsbehälter sowohl in seinem Halsbereich als auch bodenseitig Halterungsvorsprünge oder andere Mittel, wie z.B. eine Rundgewindeprägung, für das Aufschrauben eines Verschlussdeckels aufweisen.

Stempelgeschwindigkeit, Werkzeugform und -temperatur sowie Luftzufuhr müssen ebenso aufeinander abgestimmt sein, wie das Material des Werkzeuges einschließlich des Stempels 8 in Bezug auf das Material der Verpackungsfolie 1.

Vorzugsweise erfolgt eine variable Steuerung der Stempelgeschwindigkeit des Stempels 8 (gegebenenfalls auch einer Vertikalbewegungsgeschwindigkeit des unteren Gegenstempels 11 über Servomotoren oder eine Pneumatik-Steuereinrichtung.

Die Steuerung der Stempeltemperatur des Stempels 8 kann örtlich variabel sein, wird jedoch vorzugsweise gleichmäßig gehalten. Gleiches gilt für die Gestaltung und Strukturierung der Oberfläche des Stempels 8, für die Steuerung der Werkzeugtemperatur des Unterwerkzeuges 5 (gleichmäßig oder örtlich variabel) und die Oberflächengestaltung für insbesondere den Formhohlraum 12 des Unterwerkzeuges 5. Auch die Lufttemperatur der für den Blasformvorgang eingeblasenen Druckluft kann einer speziellen Steuerung unterliegen.

Auch zur Förderung der Produktionsgeschwindigkeit ist es möglich, den Stempel 8 aus mehreren, teleskopartig ineinander arbeitenden Stempeln zusammenzusetzen.

Der Formhohlraum 12 im Unterwerkzeug kann z.B. auch Henkel-Geometrien beinhalten. Das Formverfahren läuft in diesem Werkzeug wie folgt ab:

Zunächst erfolgt der Folientransport der Verpackungsfolie 1 in vorerhitztem und/oder vorbehandeltem Zustand in den Bereich zwischen Ober- und Unterwerkzeug 4, 5. Anschließend wird die Verpackungsfolie 1 stillgesetzt. Sodann wird das Unterwerkzeug 5 und anschließend auch das Gesamtwerkzeug durch Vertikalbewegung des Unterwerkzeuges und Aufsetzen des Niederhalters (Aufnahmekörper 7) geschlossen. Nunmehr senkt sich der präzise temperierte (geheizte oder gekühlte) Stempel 8 mit kontrollierter, an den Tiefziehprozeß variabel angepasster Geschwindigkeit ab zur Tiefzieh-Verformung der Verpackungsfolie 1 in den Formhohlraum 12 des Unterwerkzeuges 5. Die Verpackungsfolie 1 hat dabei nur geringen Kontakt im Halsbereich mit dem Unterwerkzeug 5, in diesem Bereich entspricht der radiale Spalt bzw. Abstand zwischen Stempel 8 und Formhohlraum 12 im wesentlichen der Wandstärke des späteren Verpackungsbehälters 3 (Foliendicke) zuzüglich einer gewissen Bewegungstoleranz. Nach Zurücklegen eines bestimmten Stempelweges des Stempels 8 wird der zusätzliche Blasformvorgang, insbesondere ausgelöst durch den Stempel 8, eingeleitet (Einblasen von Druckluft über den Druckluftraum 6 nach unten in den Raum zwischen Stempel 8 und vorgeformter Verpackungsfolie 1), worauf sich die erhitzte Verpackungsfolie 1 durch den Luftdruck an die Wandung des Formhohlraumes 12 anlegt und dort abkühlt.

Anschließend wird der Stempel 8 nach oben zurückgeführt und das Werkzeug geöffnet (einschließlich Öffnen des Unterwerkzeuges 5), der am Folienmaterialverbund hängende Verpackungsbehälter 3 (s. Fig. 2e) wird sodann aus dem Bereich der Formstation II weiter zur (hier nicht gezeigten) Füllstation transportiert.

In Fig. 3 ist ein Ausführungsbeispiel des Unterwerkzeuges 5 mit zwei nebeneinanderliegenden Formhohlräumen 12 in geöffnetem Zustand dargestellt. Die Formhälften 9, 10 des Unterwerkzeuges 5 sind über Schlitten 15 auf Führungsschienen 16 gleitverschieblich gelagert. Die Führungsschienen 16 sind auf einer Lagerungsplatte 17 angeordnet, die ihrerseits über Aufnahmebohrungen 18 an einem (hier nicht dargestellten) Säulenführungsgestell vertikal beweglich gelagert ist.

Die den Boden des Formhohlraumes 12 begrenzenden Gegenstempel 11 sind über eine Supporteinrichtung 19 ebenfalls an den Führungsschienen 16 gelagert.

Eine solche Werkzeugkonfiguration gestattet in günstiger Weise sowohl die Auswechselbarkeit der einzelnen Teile des Unterwerkzeuges 5 zur Schaffung von Formhohlräumen 12 unterschiedlicher Konfiguration und lässt auch mühelos komplizierte und hinterschnittene Geometrien für die Verpackungsbehälter frei zu. Die Unterwerkzeug-Formhälften 9 wie auch die Gegenstempel 11 können Füllkanäle zum Durchströmen mit Kühlflüssigkeiten aufweisen oder auch Heizeinrichtungen, auch zur lokal differenzierten Erwärmung der Form aufnehmen.

Die laterale Schließ- und Öffnungssteuerung der gegenläufig bewegbaren Unterwerkzeug-Formhälften 9, 10 kann in Verbindung mit einem schlittenfesten Anschlag 20 und einer in Verbindung mit einer Führung 21 vorgesehenen, hier nicht dargestellten Steuervorrichtung, erfolgen.

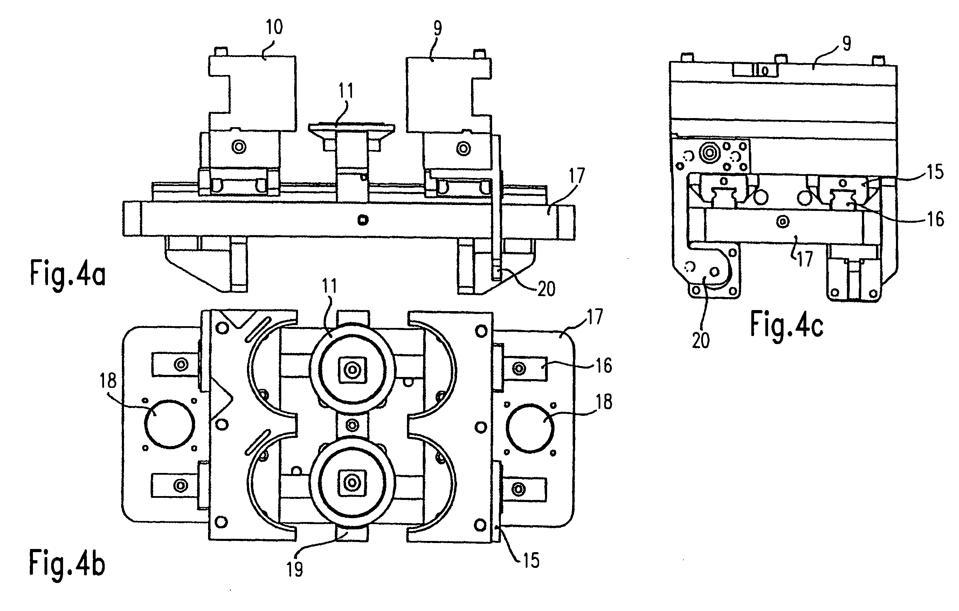

Die Fig. 4a bis 4c zeigen eine Vorderansicht (Fig. 4a), eine Draufsicht (Fig. 4b) und eine Seitenansicht des Unterwerkzeuges nach Fig. 3 in schematischer Darstellung, so dass diesbezüglich auf die Erläuterungen zu Fig. 3 verwiesen wird.

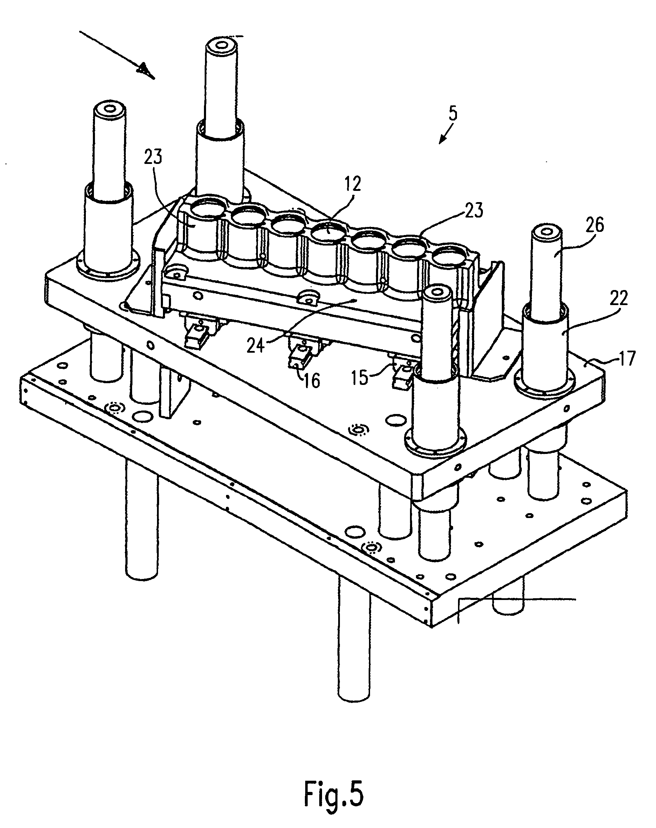

Fig. 5 zeigt eine andere Ausfuhrungsform eines Unterwerkzeuges 5 für die Formstation II in Verbindung mit einem Säulenführungsgestell 22 zur Vertikalführung des Unterund/oder Oberwerkzeuges 5, 4.

Bei diesem Ausführungsbeispiel ist in "Reihenanordnung" einer Mehrzahl von Formhohlräumen 12 in Verbindung mit begrenzenden Zylinderabschnitten 23, die jeweils mit gegenüberliegenden Führungsplatten 24, 25 verbunden, vorzugsweise integral, sind, eine Lateralführungsvorrichtung für das Öffnen des Unterwerkzeuges 5 geschaffen, die über seitliche Steuerschablonen 27 entlang der auf der Lagerungsplatte 17 befestigten Führungsschienen 16 erfolgt, auf denen die Führungsplatten 24, 25 über Schlitten 15 abgestützt sind. Auf diese Weise wird über eine Vertikalbewegung der Lagerungsplatte 17 entlang der Führungssäulen 26 durch Formeingriffsmittel der Steuerschablonen 27 eine Lateralbewegung der beiden Unterwerkzeug-Formhälften 9, 10 (gebildet durch die Zylinderabschnitte 23 und die Führungsplatten 24, 25) erreicht. Hinsichtlich möglicher Kühlung oder Erwärmung des Unterwerkzeuges zur Erzielung eines optimalen Fertigungsergebnisses wird auf die Erläuterungen zu dem Ausführungsbeispiel nach Fig. 3 verwiesen, das insoweit auch für die vorliegende Ausführungsform gilt.

Besonders bemerkenswert bei dieser Anordnung ist die geneigte (schräggestellte) Anordnung des Unterwerkzeuges 5 im Säulenführungsgestell 22, die zu einer besonders kompakten und platzsparenden Anordnung und Ausbildung der Formstation II sowie zu einer effizienten Ausnutzung der Verpackungsfolie 1 führt, die in Fig. 5 in Pfeilrichtung, d.h. parallel zu den Längskanten der Führungsplatte 17 relativ zu dem Unterwerkzeug 5 bewegt wird.

Vorzugsweise beträgt der Neigungswinkel der Reihenanordnung zur Laufrichtung der Verpackungsfolie 45°. Gegebenenfalls können auch mehrere Reihen solcher Formen in Anordnung "auf Lücke" parallel vorgesehen sein.

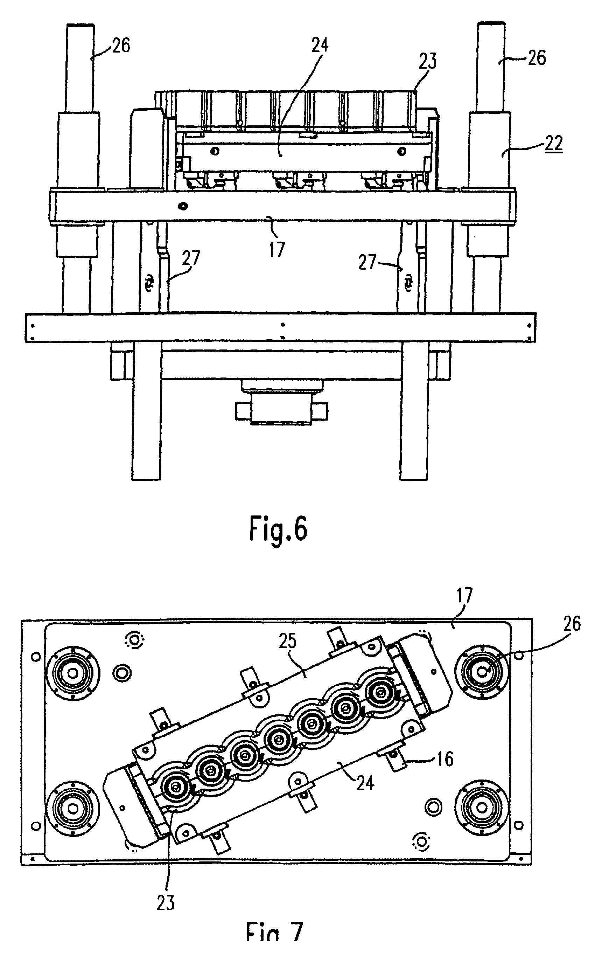

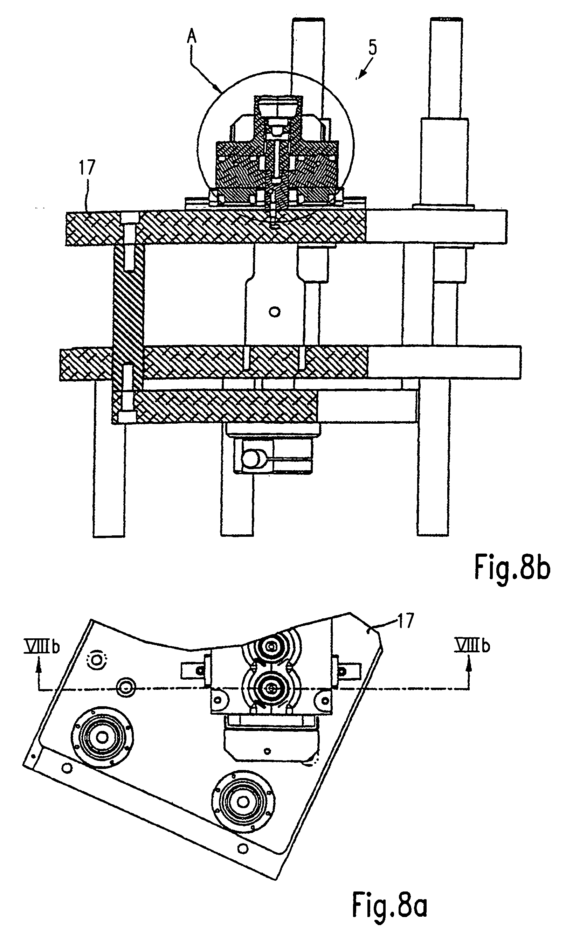

Eine Vorderansicht des Säulenführungsgestells 22 mit dem Unterwerkzeug 5 und eine Draufsicht dieses Werkzeugaufbaus sind in den Fig. 6 und 7 dargestellt.

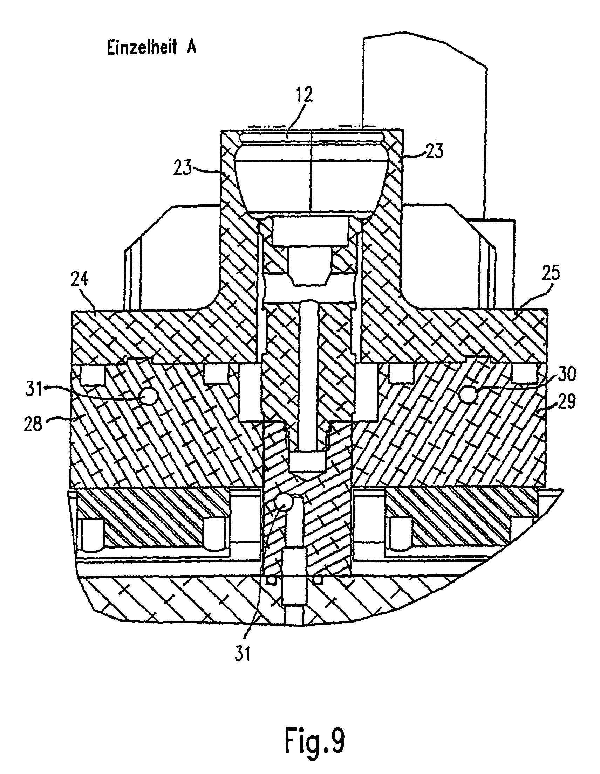

Fig. 8a zeigt eine Teildarstellung nach Fig. 7 für das geschlossene Unterwerkzeug, wobei eine Schnittdarstellung nach Fig. 8a in 8b dargestellt ist, mit einer Einzelheit A, die vergrößert in Fig. 9 gezeigt ist.

Die Einzelheit nach Fig. 9 zeigt das Unterwerkzeug in geschlossenem Zustand. Die Zylinderabschnitte 23 bilden integral mit den Führungsplatten 24, 25 und dem Gegenstempel 11 den jeweiligen Formhohlraum 12. Gemeinsam mit Stutzkörpern 28, 29 wird eine Lateral-Bewegung zum Öffnen und Schließen des Formhohlraumes 12 bewirkt Kanäle 30, 31 können sowohl der Führung eines Kühlmittels in den Stützkörpern als auch im Bereich des Gegenstempels dienen.

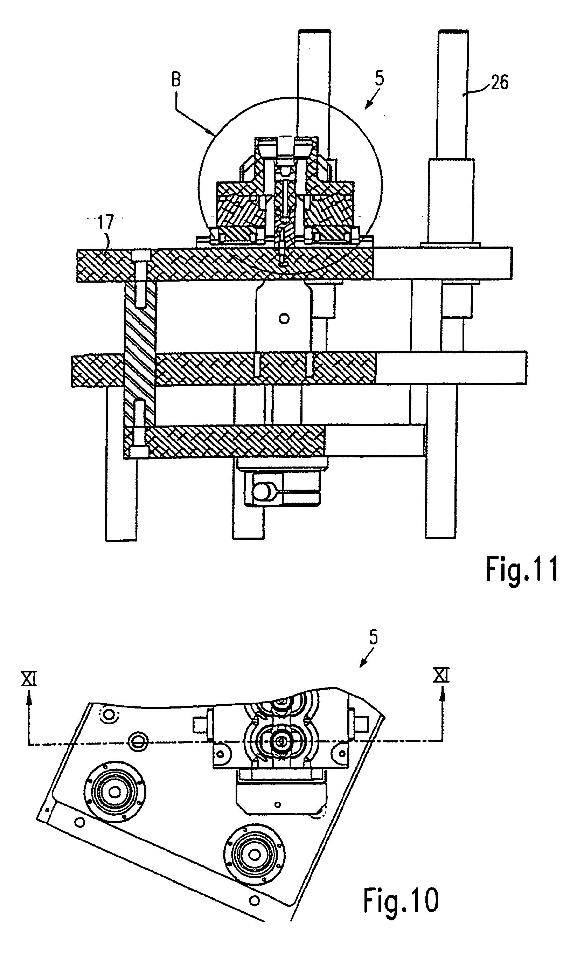

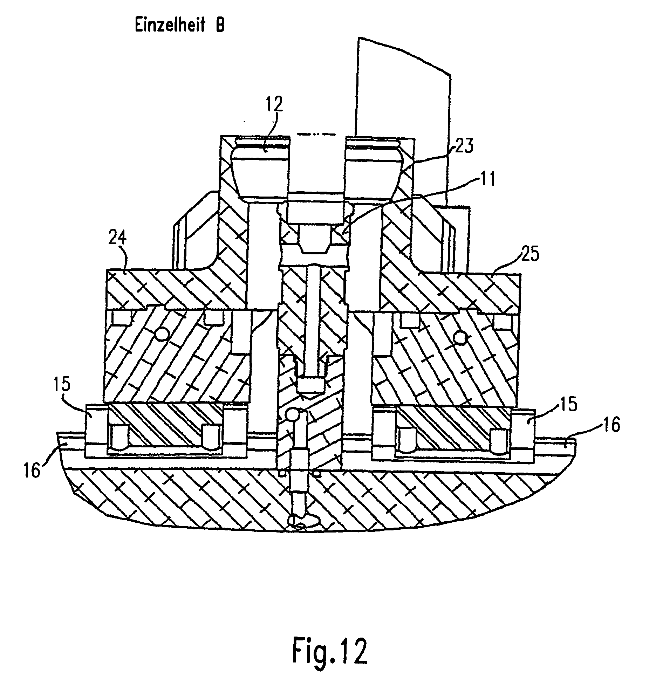

Die Fig. 10, 11 und 12 zeigen den Darstellungen gemäß Fig. 8a, 8b und 9 entsprechende Darstellungen, jeweils für das geöffnete Unterwerkzeug.

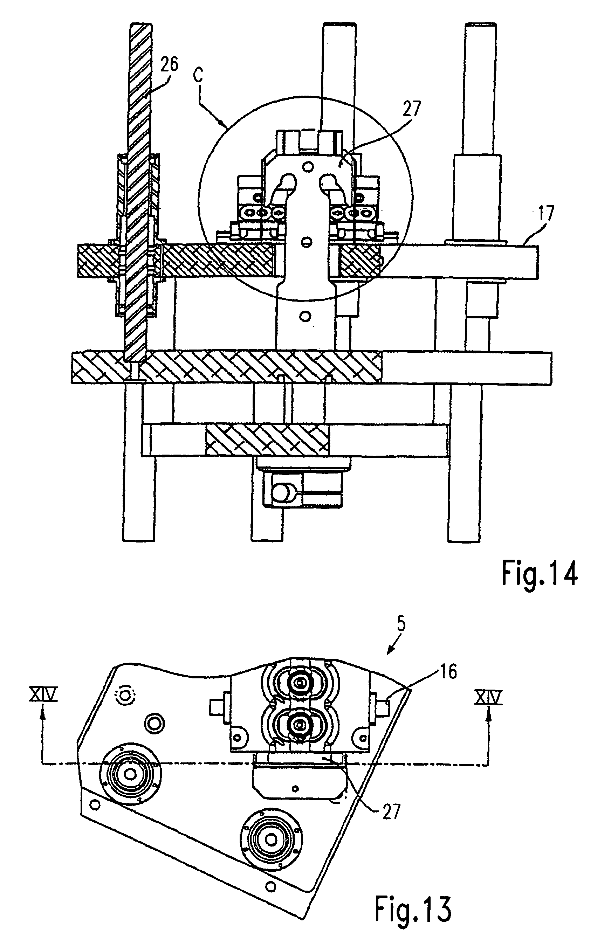

Die Fig. 13 und 14 verdeutlichen Schnittdarstellungen (Seitenansichten) des Säulenführungsgestelles und des Unterwerkzeuges 5 bei geöffnetem Werkzeug, wobei zugleich die Steuerschablone 27 genauer gezeigt ist. Diese ist als aufragendes Formteil ausgebildet, das durch die Lagerungsplatte 17 hindurchgreift und stirnseitig den Werkzeugblock des Unterwerkzeuges 5 begrenzt. Die Steuerschablone 27 weist ein Paar geneigter Steuerkurven 32 auf, die mit entsprechenden Gegenformelementen (Rollen 33, die an den Stützkörpem 28, 29 ausgebildet sind, bei vertikaler Relativbewegung zwischen Steuerschablone 27 und Stützkörper 28 bzw. 29 in Eingriff gelangen und eine laterale Zwangssteuerung zum Öffnen und Schließen der Unterwerkzeug-Formhälften 8, 9 (bzw. der entsprechenden Führungsplatten 24, 25 mit den Zylinderabschnitten 23) bewirken.

Auf diese Weise ist eine sehr vorteilhafte und funktionssichere Steuerung für die Öffnungs- und Schließbewegung des Unterwerkzeuges 5 realisiert (s. auch die vergrößerte Darstellung nach Fig. 14.)

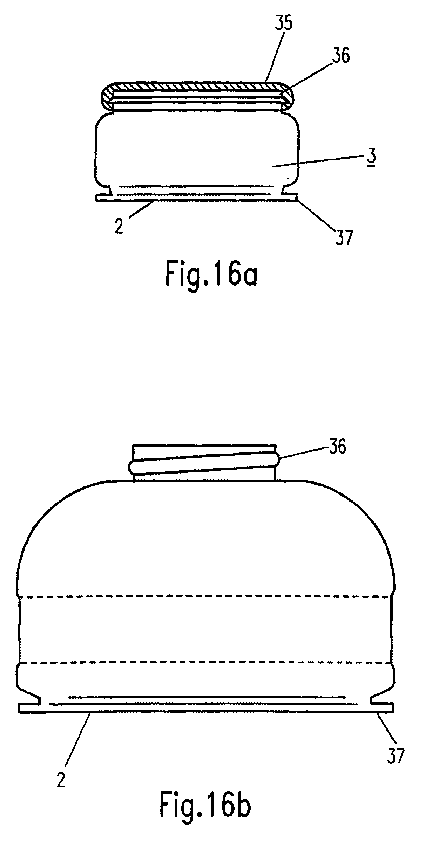

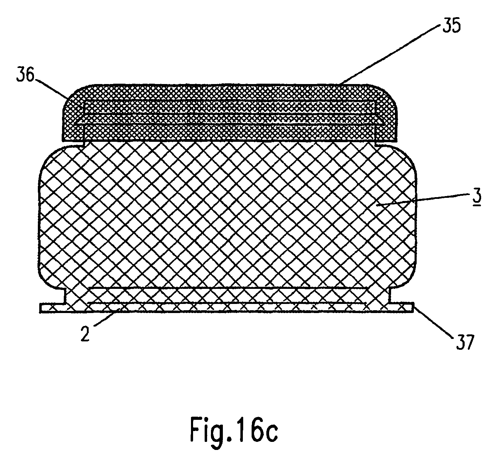

In den Fig. 16a, 16b, 16c sind Ausführungsbeispiele von Verpackungsbehältern 3 dargestellt, die aus thermoplastischem Kunststoffmatenal und nach dem vorerörterten Verfahren bzw. mit den erläuterten Vorrichtungen hergestellt sind.

Durch das erfindungsgemäße Verfahren ist es möglich, zusätzlich zum Verschluss des Verpackungsbehälters 3 mit der (Heiß-Siegelfolie 2 auch noch einen Schraubdeckel-Verschluss vorzusehen, entweder auf derselben Seite wie die Siegelfolie 2 oder an der gegenüberliegenden Seite des Verpackungsbehälters 3. Mit anderen Worten ist es durch die erfindungsgemäße Vorrichtung möglich, in besonders vorteilhafter Weise wieder verschließbare Kunststoff-Verpackungsbehälter 3 herzustellen, was insbesondere für die Aufbewahrung von Restmengen (Lebensmitteln) in den Verpackungsbehältern von großem Vorteil ist und die Verwendungsdauer der Verpackungsbehälter 3 drastisch erhöhen kann, so dass sich eine deutlich geringere Umweltbelastung ergibt

Die Fig 16a bis 16b zeigen Ausführungsformen für Verpackungsbehälter 3 mit aufschraubbarem Deckel 35, der ebenfalls aus Kunststoffmaterial besteht. Das besondere dieser Ausführungen liegt darin, dass der Deckel auf die (bezogen auf das Herstellungsverfahren) ehemalige "Bodenseite" des Verpackungsbehälters 3 aufgeschraubt ist, der In diesem Bereich mit einem Schraubgewinde 36 versehen ist. Das heißt, dass die "Heißsiegelseite" im gebrauchsfertigen Zustand den Boden des befüllten Verpackungsbehalters 3 bildet, während im (bezogen auf die Formgebung) ehemaligen Bodenbereich umfangsseitig das Schraubgewinde 36 vorgesehen ist und der Behälterboden eine Öffnungsvorrichtung aufweist, d.h. so vorgeprägt, vorgestanzt oder in seiner Materialstärke anderweitig geschwächt ist, dass ein einfaches Öffnen dieser Seite des Verpackungsbehälters möglich ist, so dass diese Seite die für den Verbraucher zu benutzende Öffnungs- und Entnahmeseite des Verpackungsbehälters bildet, während die Siegelfolie 2 den Boden des Verpackungsbehälters 3 bildet, der im praktischen Gebrauch verschlossen bleibt

Fig 16b zeigt einen derartigen Verpackungsbehälter 3 ohne Deckel.

Für den (hier nicht dargestellten) Fall, dass der Schraubdeckel auf derselben Seite wie die Siegelfolie und der Schraubdeckel den Siegelrand und die Siegelfolie übergreifend angeordnet werden soll (das Schraubgewinde sich also unterhalb der Siegelfolie am Außenumfang des Verpackungsbehälters befindet), ist der Siegelrand möglichst knapp gehalten und eine entsprechende Aufrisslasche so ausgeführt, dass diese abgewinkelt werden kann, um das Aufschrauben des Deckels nicht zu behindem. Selbstverständlich kann auch der Siegelrand selbst als Träger für das Aufsetzen eines weiteren Deckels (Schnappsitz) verwendet werden (gegebenenfalls in weiterer Umfangs-Anlage mit der übrigen Umfangswandung des Behälters).

Die Erfindung betrifft ein Verfahren zur Herstellung von Verpackungsbehältern aus Kunststoff, einen Verpackungsbehälter, insbesondere hergestellt nach diesem Verfahren, ein Verfahren zur Herstellung befüllter und verschlossener Verpackungsbehälter, eine Formstation für einen Kunststoff-Verpackungsbehälter sowie eine Verpackungsmaschine mit einer solchen Formstation. Erfindungsgemäß wird in einem kontinuierlichen Verfahren und einer zugehörigen Verpackungsmaschine ein Verpackungsbehälter in einem kombinierten Tiefzieh-Blasform-Vorgang mit Hinterschneidungen hergestellt und anschließend in einem kontinuierlichen Prozeß mit einem Verpackungsgut befüllt und versiegelt, wobei anschließend die geschlossenen Verpackungsbehälter voneinander abgetrennt und, gegebenenfalls mit einem Wiederverschlussdeckel versehen, abgeführt werden.

## Patentansprüche

1. Verfahren zum Herstellen von befüllten und verschlossenen, mit zumindest einer Hinterschneidung versehenen Verpackungsbehältern aus Kunststoff, wobei eine zumindest teilweise aus Kunststoffmaterial bestehende Folie in einer Formstation mit einer geteilten Form durch eine Kombination aus Tiefziehen und Blasformen gleichzeitig zu einer Mehrzahl Verpackungsbehältern geformt und diese mit einem eine jeweilige Einfüllöffnung für das Verpackungsgut umgebenden Rand zum Aufsiegeln einer Siegelfolie in einer Siegelstation versehen werden, die Verpackungsbehälter mit einem Verpackungsgut befüllt, anschließend mit einer Siegelfolie versiegelt, vereinzelt und abgefördert werden.

2. Verfahren nach Anspruch 1, **dadurch gekennzeichnet, dass** die Folie durch zumindest einen Stempel eines Oberwerkzeuges in einem Tiefziehvorgang in einen Formhohlraum eines Unterwerkzeuges verlagert und anschließend unter Eintragen eines gasförmigen Mediums eine Ausbildung des Verpackungsbehälters unter Anlegen der Folie an eine Wandung des in dem Unterwerkzeug ausgebildeten Formhohlraumes erfolgt.

3. Verfahren nach Anspruch 1 oder 2, **dadurch gekennzeichnet, dass** der Verpackungsbehälter mit Verschlussmitteln zum Halten eines Verschlussdeckels versehen wird.

4. Verfahren nach Anspruch 2 oder 3, **dadurch gekennzeichnet, dass** eine Bewegung des Stempels des Oberwerkzeuges über den Stempelweg mit variabler Geschwindigkeit erfolgt.

5. Verfahren nach zumindest einem der vorhergehenden Ansprüche 2 bis 4, **dadurch gekennzeichnet, dass** das gasförmige Medium Druckluft ist.

6. Verfahren nach zumindest einem der vorhergehenden Ansprüche 1 bis 5, **dadurch gekennzeichnet, dass** die Folie vor dem Verformen vorgewärmt und/oder von einem Wickel als eine kontinuierliche Materialbahn aus Kunststoffmaterial verarbeitet wird.

7. Verfahren nach zumindest einem der vorhergehenden Ansprüche 3 bis 6, **dadurch gekennzeichnet, dass** die Verschlussmittel auf Seiten der Siegelfolie und/oder an einer dieser gegenüberliegenden Seite des Verpackungsbehälters zum Festlegen des Deckels ausgebildet werden.

8. Verfahren nach zumindest einem der vorhergehenden Ansprüche 3 bis 7, **dadurch gekennzeichnet, dass** der Deckel in der Art eines Schnappsitzes mit dem Verschlussmittel verbunden wird.

9. Verfahren nach zumindest einem der vorhergehenden Ansprüche 3 bis 8, **dadurch gekennzeichnet, dass** der Deckel mit einem radial vorspringenden Umfangsvorsprung in einem Schnappsitz in Eingriff gebracht wird oder - bei Ausbildung des Verschlussmittels als Schraubgewinde - auf dieses aufgeschraubt wird

10. Verfahren nach zumindest einem der vorhergehenden Ansprüche 3 bis 9, **dadurch gekennzeichnet, dass** der Deckel auf ein im Boden- oder Halsbereich des Verpackungsbehälters vorgesehenes Schraubgewinde aufgeschraubt wird, das sich entweder unterhalb einer Siegelfolie im Halsbereich des Behälters oder im Bodenbereich des Verpackungsbehälters auf der der Siegelfolie gegenüberliegenden Seite befindet.

11. Verfahren nach zumindest einem der vorhergehenden Ansprüche 1 bis 10, **dadurch gekennzeichnet, dass** die geformten Verpackungsbehälter zusammenhängend aus der Formstation in eine Befüllstation befördert und mit dem Verpackungsgut befüllt, anschließend die Verpackungsbehälter mit einer Siegelfolie versiegelt und die befüllten und verschlossenen Verpackungsbehälter durch Ausstanzen im Bereich eines Siegelrandes vereinzelt und abgefördert werden.

12. Verfahren nach zumindest einem der vorhergehenden Anspruche 1 bis 11, **dadurch gekennzeichnet, dass** zusätzlich die mit Verpackungsgut gefüllten und mit der Siegelfolie verschlossenen Verpackungsbehälter mit einem Deckel, insbesondere Schraub- oder Schnappsitzdeckel auf der Seite der Siegelfolie oder auf der gegenüberliegenden Seite des Verpackungsbehälters versehen werden.

13. Verpackungsbehälter aus einer Kunststofffolie, insbesondere hergestellt gemäß Verfahren nach zumindest eines der vorhergehenden Ansprüche 1 bis 12, **gekennzeichnet durch** zumindest eine Hinterschneidung und mit einer Siegelfolie verschließbar und/oder versehen mit Verschlussmitteln zum Halten eines Deckels.

14. Verpackungsbehälter nach Anspruch 13, **dadurch gekennzeichnet, dass** die Verschlussmittel auf der Seite der Siegelfolie und/oder an der der Siegelfolie gegenuberliegenden Bodenseite des Verpackungsbehälters vorgesehen sind.

15. Verpackungsbehälter nach Anspruch 13 oder 14, **gekennzeichnet durch** eine zumindest partiell geringere Materialstärke und/oder Aufreiß- oder Öffnungsvorrichtungen zum Öffnen eines bodenseitigen Bereiches des Verpackungsbehälters.

16. Verpackungsbehälter nach zumindest einem der vorhergehenden Ansprüche 13 bis 15, **gekennzeichnet durch** einen radial vorspringenden Umfangs-Randabschnitt.

17. Verpackungsbehälter nach zumindest einem der vorhergehenden Ansprüche 13 bis 16, **gekennzeichnet durch** ein Schraubgewinde als Verschlussmittel.

18. Verpackungsbehälter nach zumindest einem der vorhergehenden Ansprüche 13 bis 17, **dadurch gekennzeichnet, dass** in einem Halsbereich oder bodenseitig Halterungsvorsprünge für das Festlegen eines Verschlussdeckels vorgesehen sind.

19. Verpackungsbehälter nach zumindest einem der vorhergehenden Ansprüche 13 bis 18, **dadurch gekennzeichnet, dass** auf der Seite der Siegelfolie und/oder im Bodenbereich ein Schraubdeckelverschluss oder auf Seiten der Siegelfolie ein Deckel in einem Schnappsitz vorgesehen ist.

20. Verpackungsbehälter nach zumindest einem der vorhergehenden Ansprüche 13 bis 19, **gekennzeichnet durch** seine Herstellung einer zweiteiligen Form, deren Öffnungs- und Schließrichtung senkrecht zu einer Bewegungsrichtung eines Stempels zur Formgebung des Verpackungsbehälters verläuft und mittels eines vertikal beweglichen Gegenstempels als Bodenbereich eines zugehörigen Formwerkzeuges..

21. Verpackungsbehälter nach zumindest einem der vorhergehenden Ansprüche 13 bis 20, **dadurch gekennzeichnet, dass** in Verbindung mit der Siegelfolie eine Aufreißlasche vorgesehen ist, die in Verbindung mit dem Aufsetzen eines Deckel nach unten abwinkelbar ist.

22. Formstation für zumindest einen Kunststoff-Verpackungsbehälter (3), insbesondere nach zumindest einem der Ansprüche 13 bis 21 und insbesondere zur Durchführung eines Verfahrens nach zumindest einen der vorhergehenden Ansprüche 1 bis 12, mit einem Oberwerkzeug (4) und einem Unterwerkzeug (5), wobei in dem Oberwerkzeug (4) ein axial verlagerbarer Stempel (8) und in dem Unterwerkzeug (5) ein mit zumindest einer Hinterschneidung versehener, vorzugsweise rotationssymmetrischer Formhohlraum (12) vorgesehen ist, in den der Stempel (8) unter Tiefziehen einer Kunststofffolie (1) verlagerbar ist, das Unterwerkzeug (5) lateral geteilt und die Unterwerkzeug-Formhälften (9, 10) im wesentlichen senkrecht zu einer Bewegungsrichtung des Stempels (8) zum Öffnen und Schließen des Unterwerkzeuges (5) bewegbar sind, und mit einer Druckgas-Zuführungseinrichtung (6), wobei ein Bodenbereich des im Unterwerkzeug (5) ausgebildeten Formhohlraumes (12) durch einen, insbesondere vertikal beweglichen, Gegenstempel (11) gebildet ist.

23. Formstation nach Anspruch 22, **dadurch gekennzeichnet, dass** die Unterwerkzeug-Formhälften (9, 10) und/oder ein Gegenstempel (11) zumindest teilweise individuell beheizt und/oder gekühlt sind.

24. Formstation nach Anspruch 22 oder 23, **dadurch gekennzeichnet, dass** das Oberund Unterwerkzeug (4, 5) in einem Säulen-Führungsgestell angeordnet ist und dass Ober- und Unterwerkzeug (4, 5) ein Mehrfachform-Werkzeug mit einer Mehrzahl von Formhohlräumen (12) und Stempeln (8) ist, und die Mehrfachform-Formhohlräume in Reihenanordnung vorgesehen sind, wobei die Reihenanordnung geneigt zu dem Säulen-Führungsgestell und in bezug auf eine Transportrichtung der Kunststofffolie (1) angeordnet sind

25. Formstation nach Anspruch 24, **dadurch gekennzeichnet, dass** die Reihenanordnung unter einem hinsichtlich Ausnutzung der der Kunststofffolie (1) optimierten Neigungswinkel vorgesehen ist, vorzugsweise dieser Neigungswinkel 45° zur Laufrichtung der Kunststofffolie beträgt.

26. Formstation nach zumindest einem der vorhergehenden Ansprüche 22 bis 25, **dadurch gekennzeichnet, dass** stirnseitig zumindest eine Steuerschablone (27) vorgesehen ist, die geneigte Steuerkurven (32) aufweist, die in Verbindung mit einer vertikalen Relativbewegung zwischen Unterwerkzeug (5) und Steuerschablone (27) in Eingriff mit Formelementen (33) des Unterwerkzeuges (5) bringbar ist, zur lateralen Bewegungssteuerung der Öffnungs- und Schließbewegung der Unterwerkzeug-Formhälften (9, 10) des Unterwerkzeuges (5).

27. Formstation nach Anspruch 26, **dadurch gekennzeichnet, dass** die Steuerschablone (27) an einer im wesentlichen parallel zur Tragplatte (17) des Unterwerkzeuges (5) angeordneten Stützplatte befestigt ist, und durch eine Ausnehmung (34) in der das Unterwerkzeug (5) tragenden Tragplatte (17) hindurchragt, zum Eingriff mit den Gegen-Formelementen (33) des Unterwerkzeuges (5).

28. Verpackungsmaschine mit einer Formstation für Kunststoff-Verpackungsbehälter, insbesondere nach zumindest einem der vorhergehenden Ansprüche 22 bis 27, in der aus einer Kunststofffolie in einem kombinierten Tiefzieh-/Blasformvorgang eine Mehrzahl von zumindest jeweils eine Hinterschneidung aufweisenden Verpackungsbehältern (3) herstellbar ist, einer Füllstation (III) zum Befüllen des Verpackungsbehälters (3) mit einem Verpackungsgut, einer Siegelstation (IV) zum Versiegeln einer Einfüllöffnung des Verpackungsbehälters (3), einer Trennstation (V) zum Individualisieren der Verpackungsbehälter (3), und einer Abgabestation (VI) für die befüllten und versiegelten Verpackungsbehälter (3).

29. Verpackungsmaschine nach Anspruch 28, **dadurch gekennzeichnet, dass** stromauf der Verpackungsbehälter-Formstation (II) eine Vorwärmstation (I) für die Kunststofffolie (1) vorgesehen ist.
